# EUROPÄISCHE PATENTSCHRIFT

(11) **EP 0 537 701 B1**
(45) Veröffentlichungstag und Bekanntmachung des Hinweises auf die Patenterteilung: **09.07.1997**
(21) Anmeldenummer: 92117532.9
(22) Anmeldetag: 14.10.1992
(51) Int. Cl.: B29B 7/48, B29C 47/40

(54) **Vorrichtung zur Herstellung mineralverstärkter thermoplastischer Formmassen**
Apparatus for manufacturing mineral reinforced thermoplastic moulding material
Dispositif pour la fabrication de matériaux à mouler en matière thermoplastique renforcé par des minéraux

(30) Priorität: 16.10.1991 DE 4134169
(43) Veröffentlichungstag der Anmeldung: 21.04.1993
(73) Patentinhaber: Werner & Pfleiderer GmbH, 70469 Stuttgart (DE)
(72) Erfinder: Nettelnbreker, Hans-Jürgen, W-4358 Haltern (DE); Herrmann, Heinz, W-7000 Stuttgart (DE); Busch, Detlef, W-6232 Bad Soden am Taunus (DE); Kunstmann, Gerhard, W-6232 Bad Soden am Taunus (DE)

(56) Entgegenhaltungen:
- EP-A- 0 087 699
- EP-A- 0 118 847
- EP-A- 0 391 003
- EP-A- 0 426 619
- GB-A- 2 052 281
- US-A- 3 446 485
- US-A- 3 618 902
- US-A- 3 764 118

## Beschreibung

Die Erfindung betrifft eine Vorrichtung zur Herstellung mineralverstärkter thermoplastischer Kunststoffe, insbesondere talkum- und kreideverstärkter Polyolefine, die gewährleistet, daß mineralische Füll- und Verstärkungsstoffe so homogen in die PolymermatriX eingearbeitet werden, daß beim nachfolgenden Formgebungsschritt, z.B. Spritzgußverarbeitung, Teileoberflächen entstehen, die keine optischen Defekte wie Schlieren oder Wolkenstruktur aufweisen.

Die Herstellung verstärkter thermoplastischer Kunststoffe durch Einarbeiten von Verstärkungsstoffen in eine Polymermatrix ist beispielsweise aus der DE-AS 1 454 802 und der DE-OS 3 206 325 bekannt.
Hierbei werden die Verstärkungsstoffe als Zusatzstoff zum Polymer in einer ein- oder mehrwelligen Misch- und Knetmaschine homogen vermischt.
Als mehrwellige Misch- und Knetmaschine kommen bevorzugt sogenannte Gleichdrallschneckenextruder wie sie die DE-OS 3 206 325 zeigt in Betracht.

Gemäß diesem Stand der Technik werden die thermoplastischen Formmassen einer Schmelzmischung mit Schmelzeentgasung gegen Atmosphärendruck oder unter Vakuum unterworfen, wobei durch die Scher- und Dehnkräfte, die auf die Formmasse einwirken, die Füll- oder Verstärkungsstoffpartikel desagglomeriert und zerteilt werden.

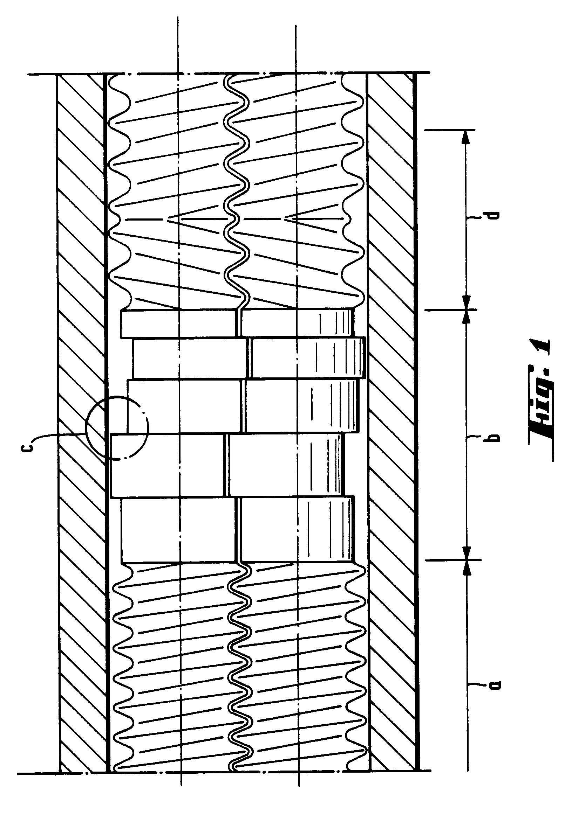

Diese Kräfte sind für ein gegebenes Matrixsystem abhängig von den geometrischen Gegebenheiten, der Spaltweite zwischen der Gewindenut einer Schnecke und dem eingreifenden Kamm der anderen Schnecke sowie den Übergängen im Bereich der Knetblöcke (vgl. Fig. 1), den Verfahrensparametern (Drehzahl, Gehäuse und/oder Wellentemperierung) und dem Maschinenfüllgrad (Dosierleistung).
- Fig. 1: zeigt einen Abschnitt des Schneckenaufbaus eines Gleichdrallschneckenextruders. Dabei bedeuten:
(a) ineinandergreifendes Dichtprofil (sog. Erdmenger-Dichtprofil wie in DE-PS 862 668 beschrieben)
(b) Knetblock mit Übergang (c) und
(d) ineinandergreifendes, Rechts-Links-Dichtprofil

Für optisch einwandfreie Teiloberflächen von Formkörpern ist es zum einen unbedingt erforderlich, daß alle gasförmigen Bestandteile über die Entgasung (atmosphärisch oder unter Vakuum) aus der Formmasse entfernt werden und daß zweitens die mineralischen Partikel möglichst vollständig mit Schmelze benetzt werden. Mikroskopische Untersuchungen haben gezeigt, daß die Wolkenstruktur von Spritzgußteileoberflächen durch unbenetzte gröbere Mineralstoffpartikel verursacht wird.

Nachteile des bekannten Verfahrens sind die während des Prozesses unveränderbaren gegebenen geometrischen Maschinenteileanordnungen und die Übergänge der Knetscheiben eines Knetblocks (s.Fig. 1 "(C)"). Bei ungünstig gewählten geometrischen Verhältnissen sind diese nur durch einen Maschinenumbau veränderbar. Die Knetscheibenübergänge stellen Unterbrechungen im Abdichtungsprofil der ineinandergreif enden Kämme dar, durch die Schmelzeanteile den Scher- und Dehnkräften ausweichen können Durch diesen Effekt können Schmelzeanteile mit ungenügend benetzten mineralischen Partikeln in den Extruderaustrag gelangen. Durch Hintereinanderschalten von mehreren Knetscheiben oder Knetblöcken kann dieser Effekt zwar herabgesetzt werden, gleichzeitig resultiert daraus aber eine höhere Materialbelastung, die sich in einem verstärkten thermomechanischen Abbau des Kunststoffes niederschlägt.

Die EP-A 391 003 beschreibt bereits eine Vorrichtung zur Einarbeitung mineralischer Füll- und Verstärkungsstoffe in thermoplastische Formmassen in Form eines Extruders mit in einer Gehäusebohrung angeordneten, selbstreinigend ineinandergreifend und gleichsinnig drehenden Schnecken, bei der ein Schmelze- und Knetmischbereich durch Schaufelelemente gebildet wird, denen eine Schmelzedrossel nachgeschaltet ist. Da es sich bei den Schaufelelementen dieser Publikation aber um herkömmliche Knetschaufeln handelt, ist die Verdichtung der Strömungslinien der Kunststoffschmelze in der Knetzone und damit der Benetzungsgrad der mineralischen Partikel mit Kunststoff immer noch verbesserungswürdig.

Die Aufgabe, die mit der vorliegenden Erfindung gelöst wird, bestand somit darin, eine Vorrichtung bzw. ein Verfahren zu finden, womit mineralische Füll- oder Verstärkungsstoffe so in thermoplastische Formmassen eingearbeitet werden können, daß daraus hergestellte Formkörper - insbesondere Spritzgußartikel- optisch einwandfreie Oberflächen aufweisen.

Die Erfindung betrifft somit eine Vorrichtung gemäß Patentanspruch 1, deren bevorzugte Ausgestaltungen in den Unteransprüchen 2 bis 4 angegeben sind, sowie ein Verfahren gemäß Anspruch 5, dessen nähere Vorzugsbereiche in den diesem untergeordneten Ansprüchen 6 bis 9 ihren Ausdruck finden.

Die Schmelzedrossel sorgt für einen Druckaufbau in den Schaufelelementen.

Bei den erfindungsgemäß zu verwendeten Extrudern handelt es sich grundsätzlich um gängige in der Produktion eingesetzte Typen, bei denen sich zwei oder mehr oder ein- oder mehrgängige Schneckenwellen in einem dicht an den äußeren Umfang der Kämme anschließenden Gehäuse gleichsinnig drehen. Beispiele für solche Extruder sind die Doppelschneckenextruder mit gleichsinnig drehenden Wellen der Fa. Werner & Pfleiderer GmbH (Stuttgart), wie z.B. der Typ ZSK 90. Bei diesen Maschinen müssen lediglich die erfindungsgemäßen Elemente auf der Extruderwelle (bzw. den Extruderwellen) montiert werden.

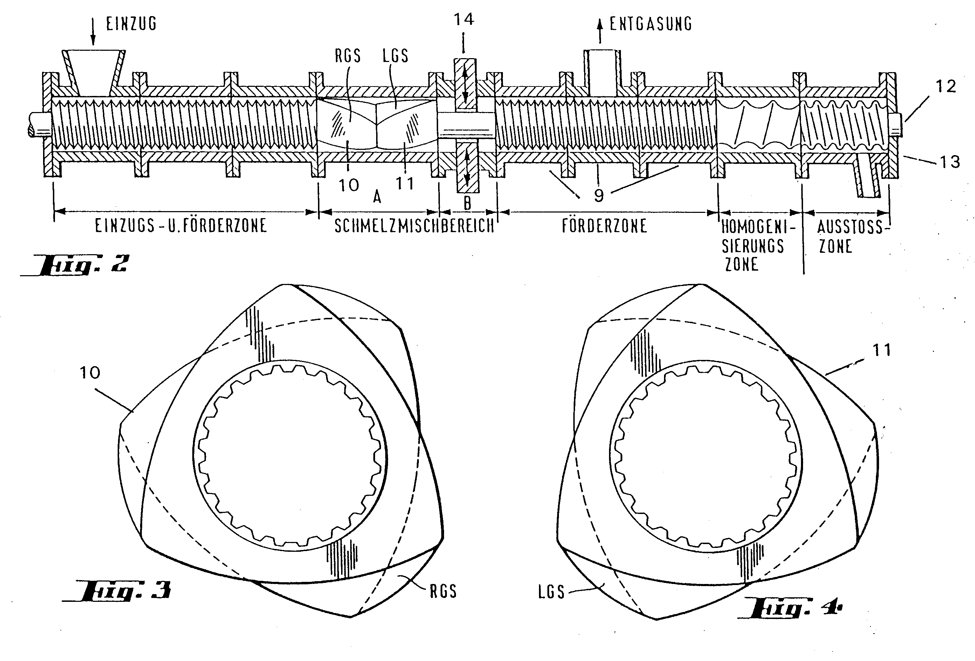

Fig. 2 zeigt den schematischen Aufbau eines Extruders 13, bei dem die einzelnen Elemente baukastenförmig auf Wellen 12 aufgefädelt sind und der im Schmelzmischbereich die erfindungsgemäße Plastifizier- und Homogensierzone (Pos. A und B) aufweist. Die Maschine weist ein Schneckengehäuse 2 auf, welches aus einzelnen Gehäuseschüssen 9 zusammengesetzt ist, die aneinandergeflanscht sind und in welchen Plastifizierelemente 1 und Förderelemente 5 aufgenommen sind. Hierdurch werden längs der Maschine mehrere unterschiedliche Zonen gebildet, neben der Schmelzmischzone, Einzugs- und Förderzonen, eine Homogenisierzone und die Ausstoßzone.

Die variable Plastifizier- und Homogenisierzone des Schmelzmischbereiches ist gekennzeichnet durch
a) sogenannte Schaufelelemente (10,11) und
b) eine Schmelzedrossel (14).

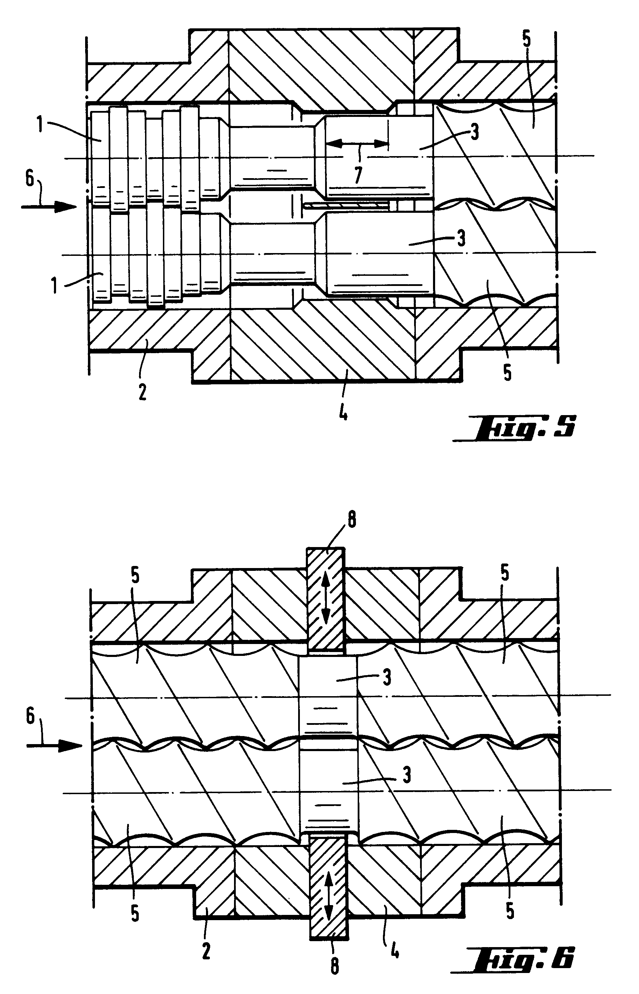

Bei den Schaufelelementen handelt es sich um je ein hintereinander angeordnetes rechtsgängiges Schneckenelement 10 und linksgängiges Schneckenelement 11 großer Steigung, wie sie in der Fig. 3 (Schaufelelement 10, rechtsgängig) und der Fig. 4 (Schaufelelement 11, linksgängig) beispielhaft gezeigt sind. Diese Schaufel- bzw. Schneckenelemente 10, bzw. 11 sind paarweise auf jeder Welle 12 des Extruders 13, vor der Schmelzedrossel B angebracht. Es handelt sich bevorzugt um zwei- oder dreigängige, dicht ineinandergreifende und sich gegenseitig abstreifende Schneckenelemente 10, 11.

Für beide Schneckenelemente 10 bzw. 11 gilt vorzugsweise:
- Steigung:: (7-17) ×D (D= Außendurchmesser des jeweiligen Schneckenelements)
- Länge:: (1,1-2,5)×D

Die Fig. 5 und 6 zeigen Beispiele erfindungsgemäßer Schmelzedrosseln 14 in Form einer Axialdrossel (Fig.5) und einer Radialdrossel (Fig.6). Die Kennziffern an den Figuren besitzen folgende Bedeutung:
1 Plastifizierelement
2 Schneckengehäuse
3 Drosselelement
4 Drosselgehäuse
5 Förderelement
6 Förderrichtung
7 Schneckenverschiebung
8 Schieberplatte

Beide Drosselanordnungen sind zum Abstauen des Schmelzeflusses längs der Schnecke geeignet. Bevorzugt wird jedoch eine Radialdrossel verwendet.

Weitere Drosselelemente sind aus der Literatur bekannt (vgl. z.B. Kunststoff-Handbruch 1975, Bd. I, S. 1045, 1056).

Durch den erzielten Staueffekt wird der Füllgrad in den voranliegenden Schaufelelementen 10 bzw. 11 stark erhöht, wodurch die Scher- und Dehnkräfte beim Materialübergang über den Schneckenprofilkamm 15 dispergierend auf die Feststoffpartikel wirken. Bei Zusammenwirken des hohen Druckes im Schmelzmischbereich in Verbindung mit den Elementen großer Steigung, die so rechts- und linksgängig hintereinander geschaltet werden, daß sich eine Keilform der Schneckenkämme 15 ergibt, in die durch den Drehsinn der Welle die Strömungslinien der Schmelze zusätzlich verdichtet werden, wird der Benetzungsgrad der mineralischen Partikel mit der Kunststoffmatrix entscheidend verstärkt.

Bevorzugt wird mit der kontinuierlich einstellbaren Drossel in den vorgeschalteten Schaufelelementen ein Massedruck von 60-120 bar erzeugt.

Hierdurch ist im zwischen Gehäuse und Schneckenkamm gebildeten Spalt der Schmelzefluß im Prozeß gezielt einstellbar, und durch die Elemente großer Steigung entfallen Unterbrechungen im Abdichtprofil.

Die vorliegende Erfindung betrifft weiterhin ein Verfahren zur Einarbeitung mineralischer Füll- und Verstärkungsstoffe in thermoplastische Formmassen mit Hilfe eines Extruders, dadurch gekennzeichnet, daß als Extruder die beschriebene erfindungsgemäße Vorrichtung verwendet wird.

Es ist möglich, Formmassen, in die bereits Füll- und Verstärkungsstoffe nach herkömmlichen Methoden eingearbeitet worden sind, durch Regranulierung mit Hilfe der beschriebenen Vorrichtung in ihren Eigenschaften deutlich zu verbessern.

Die erfindungsgemäße Vorrichtung bzw. das erfindungsgemäße Verfahren sind grundsätzlich geeignet für die Einarbeitung aller mineralischen Füll-und Verstärkungsstoffe in alle thermoplastischen Formmassen in allen für die Technik relevanten Mengenverhältnissen.

Als Beispiele für Füll- und Verstärkungsstoffe seien genannt: Talkum, Kreide, Glimmer, Bariumsulfat, gemahlene oder geschnittene Textilglasfaser, insbesondere Talkum.

Unter thermoplastischen Formmassen (Kunststoffe) sind beispielsweise Polyolefine, Polyester oder Polyamide zu verstehen. Bevorzugt werden Polyolefine und von diesen insbesondere Polyethylen und Polypropylen eingesetzt.

Insbesondere bevorzugt ist die Einarbeitung von Talkum in Polypropylen.

### Ausführungsbeispiel:

Mit einem Doppelschneckenextruder der Fa. Werner & Pfleiderer GmbH (Stuttgart), ZSK 90, der mit den erfindungsgemäßen Schaufelelementen und der Schmelzedrossel versehen war (vgl. Fig.2), wurde Polypropylen mit 40% Talkverstärkung und einem Schmelzindex MFI 5/230°C= 10 g/10 min bei einer Schmelzetemperatur von 260°C aufbereitet. Der Druck vor der Drossel betrug 100 bar. Das Schaufelelement hatte einen Durchmesser von 90 mm, eine Länge von 120 mm und eine Steigung von 960 mm. Bei der Schmelzedrossel handelte es sich um eine Axialdrossel.

Nach anschließender Verarbeitung der so hergestellten Formmassen zu Spritzguß-Stapelkästen zeigten diese Formkörper Teileoberflächen, die völlig "schlieren-und wolkenfrei" waren.

## Patentansprüche

1. Vorrichtung zur Einarbeitung mineralischer Füll- und Verstärkungsstoffe in thermoplastische Formmassen in Form eines Extruders mit in einer Gehäusebohrung angeordneten, selbstreinigend ineinandergreifend und gleichsinnig drehenden Schnecken, die in Förderrichtung eine Einzugszone, eine Schmelzemischzone und neben einer Homogenisierungszone eine Ausstoßzone bilden, dadurch gekennzeichnet, daß der Schmelze- und Knetmischbereich durch rechts- und linksgängige Schaufelelemente (10, 11) gebildet wird, die paarweise auf jeder Schneckenwelle (12) des Extruders (13) angebracht sind und zwei- oder dreigängige, dicht ineinandergreifende und sich gegenseitig abstreifende Schneckenelemente (10, 11) umfassen, und daß dem Schmelze- und Knetmischbereich (A) eine Schmelzedrossel (14) nachgeschaltet ist.

2. Vorrichtung nach Anspruch 1, dadurch gekennzeichnet, daß die Schaufelelemente eine große Steigung und ein Dichtprofil aufweisen.

3. Vorrichtung nach Anspruch 1 oder 2, dadurch gekennzeichnet, daß die Steigung der Schaufelelemente das 7 bis 12-fache und deren Länge das 1,1 bis 2,5-fache ihres Außendurchmessers beträgt.

4. Vorrichtung nach einem oder mehreren der Ansprüche 1 bis 3, dadurch gekennzeichnet, daß als Schmelzedrossel (14) eine Axial- oder Radialdrossel verwendet wird.

5. Verfahren zur Einarbeitung mineralischer Füll- und Verstärkungsstoffe in thermoplastische Formmassen mit Hilfe eines Extruders, dadurch gekennzeichnet, daß als Extruder (13) die Vorrichtung nach einem oder mehreren der Ansprüche 1 bis 4 verwendet wird.

6. Verfahren nach Anspruch 5, dadurch gekennzeichnet, daß mit der Schmelzedrossel ein Massedruck von 60-120 bar in den Schaufelelementen erzeugt wird.

7. Verfahren nach Anspruch 5 oder 6, dadurch gekennzeichnet, daß es sich ei der thermoplastischen Formmasse um ein Polyolefin handelt.

8. Verfahren nach einem oder mehreren der Ansprüche 5-7, dadurch gekennzeichnet, daß es sich bei dem mineralischen Füll- und Verstärkungsstoff um Talkum handelt.

9. Verfahren nach einem oder mehren der Ansprüche 5-8, dadurch gekennzeichnet, daß Talkum in Polypropylen eingearbeitet wird.

## Claims

1. Device for working mineral filling and re-inforcing substances into thermoplastic moulding masses, in the shape of an extruder with worms which are arranged in a housing bore, engage one into the other in self-cleaning manner, rotate in like sense and which in conveying direction form an intake zone, a melt-mixing zone and an ejection zone beside an homogenising zone, characterised thereby, that the melting and knead-mixing region is formed by clockwise and counterclockwise scoop elements (10, 11), which are mounted in pairs on each worm shaft (12) of the extruder (13) and comprise two-start or three-start, tightly interengaging and mutually wiping worm elements (10, 11) and that a melt throttle (14) is connected downstream of the melting and knead-mixing region (A).

2. Device according to claim 1, characterised thereby, that the scoop elements display a great pitch and a sealing profile.

3. Device according to claim 1 or 2, characterised thereby, that the pitch of the scoop elements amounts to 7 to 12 times their external diameter and their length amounts to 1.1 to 2.5 times their external diameter.

4. Device according to one or more of the claims 1 to 3, characterised thereby, that an axial or radial throttle is used as melt throttle (14).

5. Method according for working mineral filling and re-inforcing substances into thermoplastic moulding masses with the aid of an extruder, characterised thereby, that the device according to one or more of the claims 1 to 4 is used as extruder (13).

6. Method according to claim 5, characterised thereby, that a mass pressure of 60 to 120 bars is produced in the scoop elements by the melt throttle.

7. Method according to claim 5 or 6, characterised thereby, that a polyolefin is concerned in the case of the thermoplastic moulding mass.

8. Method according to one or more of the claims 5 to 7, characterised thereby, that talcum is concerned in the case of the mineral filling and re-inforcing substance.

9. Method according to one or more of the claims 5 to 8, characterised thereby, that talcum is worked into polypropylene.

## Revendications

1. Dispositif destiné à l'incorporation de matières minérales, servant de charge et de matière d'armature et de renfort, dans des matériaux thermoplastiques à mouler, dispositif se présentant sous la forme d'une extrudeuse comportant des vis disposées dans un alésage de corps, pénétrant les unes dans les autres avec un effet d'auto-nettoyage, et tournant dans le même sens, qui forment dans la direction de transport une zone d'introduction, une zone de malaxage de la matière fondue et, en plus d'une zone d'homogénéisation, une zone d'évacuation, caractérisé en ce que la zone de malaxage et de pétrissage de la matière fondue est constituée par des éléments en forme de pales (10, 11), à pas à droite et à pas à gauche, qui sont disposés par paires sur chaque arbre (12) de vis de l'extrudeuse (13) et qui comprennent des éléments (10, 11) de vis à pas double ou triple, qui pénètrent de façon étroite les uns dans les autres et qui se raclent mutuellement et en ce qu'une valve (14) d'étranglement pour matière fondue est montée en aval de la zone (A) de malaxage et de pétrissage de la matière fondue.

2. Dispositif selon la revendication 1, caractérisé en ce que les éléments en forme de pales présentent un grand pas et un profil d'étanchéité à imbrication étroite.

3. Dispositif selon la revendication 1 ou 2, caractérisé en ce que le pas des éléments en forme de pales est de 7 à 12 fois leur diamètre extérieur et leur longueur 1,1 à 2,5 fois leur diamètre extérieur.

4. Dispositif selon l'une ou plusieurs des revendications 1 à 3, caractérisé en ce que l'on utilise en tant que valve d'étranglement (14) une valve d'étranglement radiale ou une valve d'étranglement axiale.

5. Procédé pour l'incorporation, à l'aide d'une extrudeuse, de matières minérales servant de charge et de matière d'armature de renforcement dans des matériaux thermoplastiques à mouler, caractérisé en ce que l'on utilise en tant qu'extrudeuse (13) le dispositif selon l'une ou plusieurs des revendications 1 à 4.

6. Procédé selon la revendication 5, caractérisé en ce qu'une pression exercée dans le matériau, de 60 à 120 bars, est produite dans les éléments en forme de pales par la valve d'étranglement pour matière fondue.

7. Procédés selon les revendications 5 ou 6, caractérisés, en ce qui concerne le matériau thermoplastique à mouler, en ce qu'il s'agit d'une polyoléfine.

8. Procédé selon l'une ou plusieurs des revendications 5 à 7, caractérisé, en ce qui concerne la matière minérale servant de charge et de matière d'armature de renforcement, en ce qu'il s'agit de talc.

9. Procédé selon l'une ou plusieurs des revendications 5 à 8, caractérisé en ce que du talc est incorporé à du polypropylène.
